# EUROPEAN PATENT APPLICATION

(11) **EP 3 118 539 A1**
(43) Date of publication of application: **18.01.2017**
(21) Application number: 15176952.8
(22) Date of filing: 16.07.2015
(51) Int. Cl.: F24J 2/46, F24J 2/04, F24J 2/20

(54) **SOLAR POWERED HEATING AND VENTILATION SYSTEM**

(71) Applicant: Scanheat A/S, 8700 Horsens (DK)
(72) Inventor: Hejlsberg, Dan Hejnæs, 8700 Horsens (DK); Thomsen, Martin, 8700 Horsens (DK)
(74) Representative: Gregersen, Niels Henrik

(57) **Abstract**

Herein is disclosed a solar powered heating and ventilation system comprising an energy panel and a wall vent. The energy panel comprises a front plate where part of the front plate comprises a PV solar panel configured to produce electricity for the heating and ventilation system, a back plate adapted to collect energy from the sun and heat the air and comprising an air outlet, and a frame including two side profiles, a top profile and a bottom profile where the said bottom profile has an inlet for air attached with a mechanical filter. The wall vent is interactively separated from the energy panel by a coupling, and the wall vent comprises a fan and a filter unit with a filtering characteristic arranged to filter the heated air from the energy panel.

## Description

### Field of the Invention

The present invention relates to the technical field of energy panels, in particular energy panels that use solar energy for heating and ventilation purposes.

### Background of the Invention

An energy panel (also called solar air panel, solar air heater or solar air collector) exploits solar energy for producing and delivering warm air by creating an artificial greenhouse effect. Normally, an energy panel is mounted outside a building close to a wall. A fan mounted in the energy panel blows air from the energy panel into the building, this creates a vacuum inside the energy panel causing the outside air to be sucked into the energy panel through air inlets positioned at the bottom, the sides or the backside of the energy panel. The sucked air flows inside the energy panel, where it is warmed up by the sunlight through a glass plate comprising a wavelength filter at the front of the energy panel. The warm air is finally blown by the fan into a pipe that delivers the warm air into the building through a hole in the wall.

Prior art CN103542548 and WO08095502 both discloses flat solar air heaters for heating airflow for heating and/or ventilation of buildings by utilizing nothing but sunlight.

The air inlets in the energy panel typically have a mechanical filter mounted thereby avoiding leaves, insects and large dust particles to gather within the energy panel or to be blown into the fan or further into the building along with the warm air.

However, air taken directly from the outside can contain a high amount of pollen, mould spores and various odours which can cause nuisance or discomfort for people inside the building. This is not eliminated by a mechanical filter or by the dehydration of the air flowing through the energy panel.

The pitfalls using energy panels exploiting the sunlight for heating of the air flowing through an energy panel are an uneven distribution of the airflow or areas of stagnant air in the energy panel which can lead to gathering of moisture and sediment of particles passing through the inlet mechanical filter. Occurrence of such areas indicates non-optimal operation and should thus be avoided in the construction of the energy panel.

Hence, there is a need in the technical field of energy panels for overcoming the aforementioned drawbacks of the state-of-the-art.

### Object of the Invention

The objective of the invention is to solve the aforementioned drawbacks of allergens and odours added to the indoor climate by providing improvements to the state-of-the-art. Furthermore, it is an objective of the invention to provide improvements that minimize moisture and sediment build-ups within the energy panel and to ease the maintenance of mechanical parts. The third objective of the invention is to provide an inexpensive solution which allows the user to save energy in connection with heating, and also contributes to creating an improved indoor climate.

### Description of the Invention

The aforementioned aspects of the invention are achieved by a solar powered heating and ventilation system comprising an energy panel and a wall vent. The energy panel comprises a front plate where part of the front plate comprises a PV solar panel configured to produce electricity for the heating and ventilation system, a back plate adapted to collect energy from the sun and heat the air and comprising an air outlet, and a frame including two side profiles, a top profile and a bottom profile where the said bottom profile has an air inlet attached with a mechanical filter. The wall vent is interactively separated from the energy panel by a coupling, and the wall vent comprises a fan and a filter unit with a filtering characteristic arranged to filter the heated air from the energy panel.

The effect of interactive wall vent and energy panel separated by a coupling is that the unit can be mounted separately from the energy panel. This is advantageous in regard to maintenance and for increased flexibility in regard to placement and installation of the system.

The fan may be the only moving part and by placing the fan in the wall vent it can be made easily accessible for service. In comparison to state-of-the-art which places the fan as an integrated part of the energy panel requiring dismounting the entire energy panel for service of the fan. Or which places the fan inside a wall pipe as an integrated part of the pipe making maintenance and service of the fan cumbersome.

An effect of integrating a PV solar panel that is configured to produce electricity for driving auxiliaries that may include the fan is that it allows the fan only to operate when warm air is available. Otherwise there would be the risk of blowing cold air into the room.

In an embodiment, the air inlet is mounted with a mechanical filter. The effect of this embodiment of the invention is to provide protection against leaves and insects entering into the energy panel thus avoiding leaves and insects to gather within the energy panel or to be blown into the fan or further into the building. The mechanical filter induces resistance to the air entering the energy panel; thus the pore dimensions of the mechanical filter must be dimensioned considering the needed airflow within the energy panel.

In an embodiment a wall pipe couples the energy panel and wall vent into one unit. Advantageously, this provides for a flexible installation of the invention in that separating the energy panel and wall vent entails the possibility of mounting the energy panel on a wall outside the building and the wall vent on the opposite side inside the building. In this context it should be mentioned that the wall is not part of the invention.

In an embodiment of the invention a filter unit with a filtering characteristic is arranged to filter the heated air from the energy panel.

The effect of placing a filter in the wall vent is an extra air filtration to the system for a better indoor climate. A variety of filters are available for air filtering and air purification for indoor climate control. Filters constructed with different techniques and materials are commercially available and they are produced within a scale of different pore sizes or woven structures depending on the size of particles subject for filtration. In an embodiment of the invention the filter unit comprises at least two individual filters with different filtering characteristics, a sandwich-structured filter of at least two different filtering characteristics, or a combination of individual filters and a sandwich-structured filter of at least two different filtering characteristics. The individual filters in the filter unit are replaceable.

Filters with several functions are available as sandwich-structured filters, whereas individual filters are constructed with only one main filtering characteristic. Individual filters enhance the possibility of tailoring the exact filtering solution.

The effect of making the filters replaceable is to assure that the level of air filtration provided by the invention can be maintained throughout the lifetime of the invention. Filters eventually saturate or fill up in the pores and thus have to be replaced.

The effect of applying a sandwich-structured filter, a combination of individual filters or a combination hereof is to construct the filter for a given purpose and thereby achieve the desired filtration level and purpose with a minimum of filter components. This minimizes the operation costs for the invention. In case of several individual filters the possibility of replacing the individual filters also has the effect that a single filter with a short lifetime can be replaced thereby avoiding unnecessary replacement of working filters.

A further effect of the embodiment of mounting the wall vent separately from the energy panel is the accessibility to the filter unit and thus the ease at which the filter can be replaced.

In an embodiment of the invention the filter unit is made of disposable material, substantially disposable materials, or substantially of disposable materials. A disposable material may be a material designed for a single use after which it is recycled or is disposed as solid waste. The filter unit may be disposable. A replaceable filter may also be disposable.

In an exemplified embodiment of the invention the filter unit comprises filtering characteristics chosen amongst: absorbing filters to remove gaseous molecules including harmful or odorous compounds or molecules, fine mechanical filters to filter particulate matter including particles, pollen and large bacteria, or an antibacterial filter to remove microorganisms. The filtering characteristics can comprise either a single filter or a series of filters with a given filtering characteristic.

The effect of constructing the filter unit for different filtering characteristics is that the invention can be adapted for different environments only through changing filtering characteristics and still with the objective of a good indoor climate in mind.

Mechanical filters can be constructed with different materials and density of the material, and thus a wide variety of filters with different pore sizes or woven structures are found. Filters with large pore sizes of lose woven structures are often used as prefilters. The smaller the pore size and the closer the woven structure, the smaller are the particles that are filtered out. In the high-end the HEPA filters (high-efficiency particulate air filters) are found. The term HEPA filters are used for filters filtering out particles down to 0.3 micron in size and with an efficiency of 99.9999% in the particle size range 1 to 10 micron. The finer the grid of the filter, the higher are the air resistance and the cost.

The effect of using a series of mechanical filters (same filtering characteristics) is that a coarse filter can be used in front of finer filters and thus increase the life-time of the high-cost filters and reduce the air resistance as the thickness of the HEPA-like filter can be reduced.

A person skilled in the art will be able to determine which filtering characteristics are needed and valued for the specific surroundings. Furthermore there may be national laws concerning filtering levels and which particles to filter out in particular official buildings.

The order of the fan and the filter unit in respect to the air flow direction is not explicitly mentioned in any of the aforementioned embodiments. The order of the fan and the filter unit may be interchanged in consideration of the air resistance of the filters and the air flow though the filter unit and fan.

One exemplary embodiment of a filter unit with different filter characteristics is to use an active carbon (AC) filter as an absorbing filter, a HEPA-like filter as a fine mechanical filter and a filter with an antibacterial coating as an antibacterial filter and arranged in the order mentioned to the direction of the air flow; thus the air first enters the active carbon filter. Two effects of this filter characteristics configuration is that placing the HEPA-filter in front of the antibacterial filter prevent clogging of the antibacterial filter and thus the functionality of the antibacterial filter will be use according the main purpose. The HEPA-filter is placed after the AC filter in case of single particle release from the AC filter.

An AC filter has small, low-volume pores that increase the surface area available for adsorption or chemical reactions. The high surface area alone may provide for a sufficient activation level. Otherwise, AC filters can often be designed for specific purposes with further chemical treatment for enhanced adsorption properties or other purposes.

AC filters are used in numerous applications including air purification to remove oil vapours, odour and volatile organic compounds (VOCs). With their high degree of porosity, AC filters are also used for sound absorption where the sound energy is converted to heat.

The effect of using an AC filter in the system is that the air taken directly from the outside is filtered from odours and other vapours which can cause nuisance or discomfort for people inside the building, thereby contributing to a healthy indoor climate.

A further effect of placing the wall vent comprising the filter unit inside the building is to utilize the full capacity of the filter as the filter effect is only used for the air actually entering the building.

A further effect of placing an AC filter in connection with the fan is the sound reducing effect of an AC filter due to the micro pore structure, thereby maintaining a good indoor climate. This also includes dampening possible resonances in the wall pipe from the fan even though this has already been considered by placing the fan inside the building after the wall pipe.

The order of the filters is carefully chosen according to the type and size of particles to be collected in each filter. The placement of the anti-bacteria filter is important as bacteria trapped in an inappropriate filter can thrive and breed in room-temperature and well humidified surroundings.

In a further embodiment of the invention the filter unit may comprise an electrically driven filter part. Integrated PV solar panel in the front plate may drive an electrical filter concurrent with driving the fan or other auxiliary electrically driven parts. A broad range of electrical powered filters are employed in air filtration and purification using various techniques depending on the application: UV filters, electrostatic filters, ionic filters. For example, UV filters generate ultraviolet light with wavelength energy able to break organic molecular bonds. Thus, micro-organisms such as germs, viruses, bacteria, mould spores, etc. passing through UV rays are subject for cellular or genetic damage resulting in destruction of the micro-organisms.

The combination of a detached wall vent from the energy panel and constructing the wall vent with a filter unit addresses the objective technical problem of providing an inexpensive solution allowing the user to save energy in connection with heating and also contributes to creating an improved indoor climate. The possibility of positioning the wall vent inside a building and thereby easing access also reduces operation costs.

It is not a straight-forward task to design the wall vent with the combination of filters and fan to accommodate an even air flow all the way through the energy panel, the wall pipe and the wall vent. The air resistance of the filters depends on the humidity of the air. The temperature of the air blown into the building is also dependent on the air flow rate through the energy panel. The level of features combined in the system is complicated and therefore it is not obvious for a skilled person with basis in prior art to combine the features to a working embodiment.

In an embodiment of the invention, the wall vent is configured to operate as a function of at least one input from a sensor measuring the condition of air.

The sensor may be located outside a building and the function may be implemented so that the wall vent operates when the outside air is in a particular condition such as clean. The function may be so that the wall vent does not operate when outside air is in a particular condition such as polluted, perhaps to a degree beyond the capability of the filter.

Likewise the sensor may be located inside a building and the functions implemented accordingly. Also, there may be two or more sensors and the function may be to balance or skew the indoor and the outdoor air conditions.

In an embodiment, the invention comprises an indicator of at least one filter status, which indicator is optionally configured to signal a filter status or to operate the wall vent.

Thereby the operator is advised on when to change the filters to ensure proper operation.

In a further embodiment the invention may comprise a transceiver unit configured with one or more transmitter units for transmitting operational status of the system or receiver units for receiving operational parameters to the system.

This allows for remote information about and control of the unit.

The effect of sensory input, indicator and transceiver unit is to survey, maintain and operate the system in an easy and cost-efficient manner to avoid decrease in efficiency and to provide a conditioned indoor climate.

In an embodiment of the invention a back plate comprises a profile pattern arranged with different angles towards the sun when the energy panel is installed for intended use.

The effect of the profile pattern is amongst others, that it increases the surface area of the back plate facing the sun. The back plate of the energy panel may be heated by the sunlight passing through the front plate and through this heat the air as it passes through the energy panel along the back plate. The effect of increasing the area of the back plate is that the heat reservoir for heating the air is increased.

In an embodiment of the invention a back plate comprises a profile pattern arranged to guide the air flow as a substantially laminar flow when the energy panel is installed for intended use and with air heated by the back plate.

This constitutes a pattern for directing the airflow through the energy panel. The profile pattern creates air passageways extending from the bottom profile to the back plate outlet. The bottom profile inlet is comprised of at least one slot and extends in the length of the bottom profile towards the sides profiles. The profile pattern combined with the tailored inlet results in a surprising effect of laminar and homogenous airflow, thereby achieving the aforementioned objective of the invention of avoiding stagnant air or dead areas gathering moisture and sediments.

Advantageously, dimensioning the area of the inlet to that of the outlet provides for an optimal temperature of the warm air in output from the energy panel. Indeed, the bigger the opening, the lower the vacuum and the resistance created in the energy panel, thus the air flows too fast inside the energy panel without staying there for the necessary time for being warmed up. Vice versa, the smaller the opening, the higher the vacuum and the resistance created in the energy panel, thus the air flows too slow inside the energy panel with a consequent too high temperature in output from the energy panel.

The effect is a balanced air flow. Hence, by exploiting the solar energy and thereby, by working practically cost-free, the invention represents an inexpensive solution for heating.

Furthermore, the invention contributes to creating a better indoor climate, e.g., where the user has a poor indoor climate caused by a high humidity, which gives allergy, skin fungi, etc. Indeed, during the winter, cold air (e.g., around 0 degrees) is sucked into the energy panel and warm air (e.g., around 40 degrees) is blown out in the other end of the energy panel. Also, since the energy panel delivers dry air, a better indoor climate can be achieved. For example, in a summer house, which usually has a poor indoor climate during the winter, if the energy panel is installed, the humidity dries out.

Advantageously, the energy panel is provided with one or more plates internally to divide the energy panel into two or more chambers. The internal plates leave gaps between the top edge of the internal panel and the top profile of the energy panel or gaps between the bottom side edge of the internal panel and the bottom profile of the energy panel. In that way air entering through the air inlets of the energy panel shall first move up in the first chamber, pass through the gap in the second chamber and then flow downwards in a given pattern until it leaves through the back plate outlet positioned in the lower or upper end of the back plate. The number of internal panels to be used depends on how warm the air shall be delivered, as in fact the longer the air remains in the energy panel, the warmer it becomes.

Hereafter, the invention is described in connection with drawings illustrating non-limiting examples of a solar powered heating and ventilation system

### *Description of the Drawing

FIG. 1 illustrates the elements of the solar powered heating and ventilation system
FIG. 2 illustrates the elements of the wall vent.
FIG. 3 illustrates the elements of the energy panel
FIG. 4 illustrates the fittings
FIG. 5 illustrates the back plate with profile pattern. The view of the back plate is as seen from inside the energy panel.
FIG. 6 illustrates an exemplified wall vent embodiment comprising a fan and a filter unit with three filter characteristics.

### Notations

10: fan
20: filter unit
30: front plate
40: back plate
50: top profile
60: bottom profile
70: side profiles
90: bottom profile inlet
100: solar powered heating and ventilation system
110: mechanical filter
120: PV solar panel
130: back plate outlet
140: fitting to wall pipe
150: wavelength filtering glass plate
160: profile pattern
170: air flow direction
200: energy panel
210: absorbing filter
220: fine mechanical filter
230: antibacterial filter
300: wall pipe
400: wall vent

### Detailed Description of the Invention

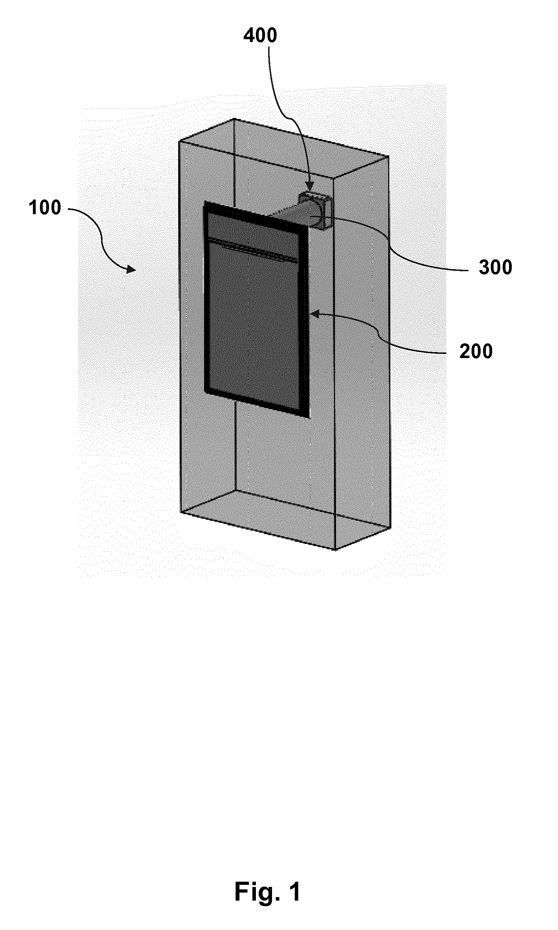

Figure 1 illustrates elements comprised in a solar powered heating and ventilation system 100: an energy panel 200, a wall pipe 300, and a wall vent 400. An exemplified embodiment is shown where the system 100 is mounted on a wall with energy panel 200 mounted on one side of the wall and wall vent 400 mounted on the opposite side of the wall and thus separated by the wall pipe 300 through the wall. In this context it should be mentioned, that the wall is not part of the invention. For intended use, the energy panel 200 is installed with the front towards the sun.

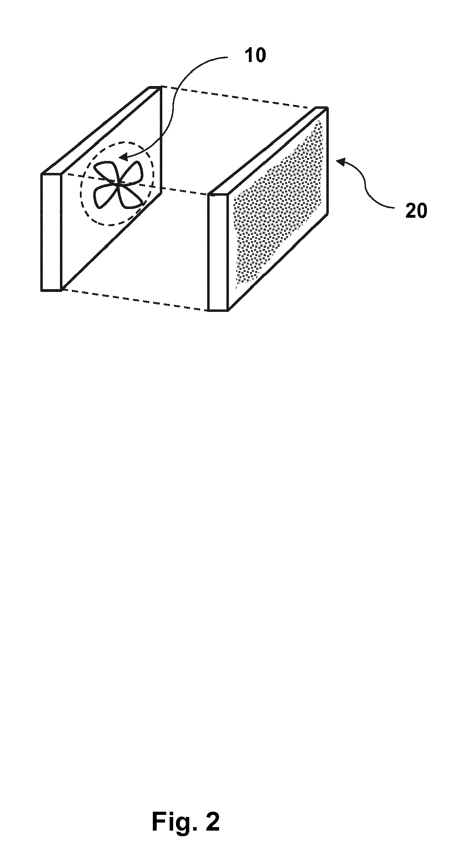

Figure 2 illustrates the elements of an exemplary wall vent, in particular a fan 10 and a filter unit 20. The order of filter unit 20 and fan 10 position according to each other is shown for one embodiment and is independent of direction of air flow. Meaning that, the order of the fan 10 and filter 20 can be reversed in another embodiment.

The filter unit 20 has at least two filtering characteristics arranged to filter air and comprises one or more filter arrangements holding at least two individual filters with different filtering characteristics or a sandwich-structured filter of at least two different filtering characteristics. The filter unit 20 is configured for the individual filter characteristics to be replaced and may comprise an electrically driven filter part.

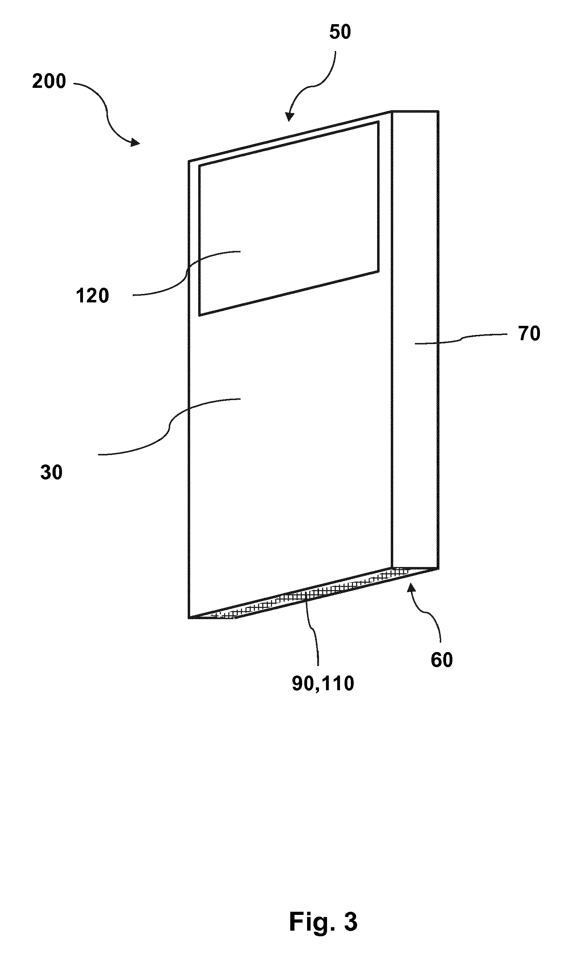

Figure 3 illustrates main elements of the energy panel. In particular, the elements constituting the frame: the side profiles 70, top profile 50 and bottom profile, where the bottom profile has an air inlet 90 mounted with a mechanical filter 110. Furthermore the figure illustrates the front plate 30 where part of the front plate 30 comprises a PV-panel 120 configured to produce electricity for the heating and ventilation system 100. Electricity produced by an integrated PV solar panel in the front plate can be used for driving auxiliary electrical parts that may include fan, filter part, transceiver unit, sensor or indicator.

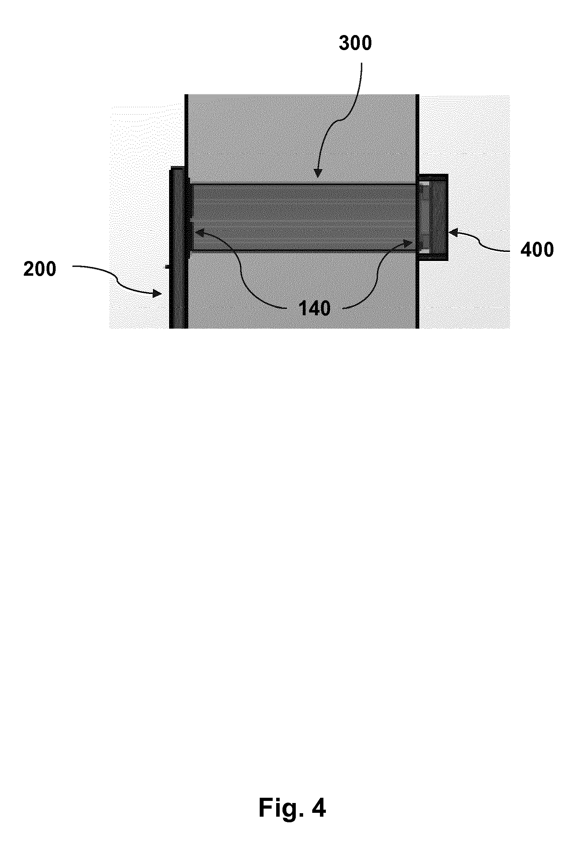

Figure 4 illustrates the fitting 140 to the wall pipe 300 of the back plate 40 and of the wall vent 400. The shape and size of the fittings 140 have dimensions fitting the shape and size of the wall pipe 300 and is dimensioned in accordance with the area of the bottom profile inlet 90 of the energy panel 200. The electrical connections from the PV solar panel to auxiliary electrical parts comprised in the solar powered heating and ventilation system 100 are not shown.

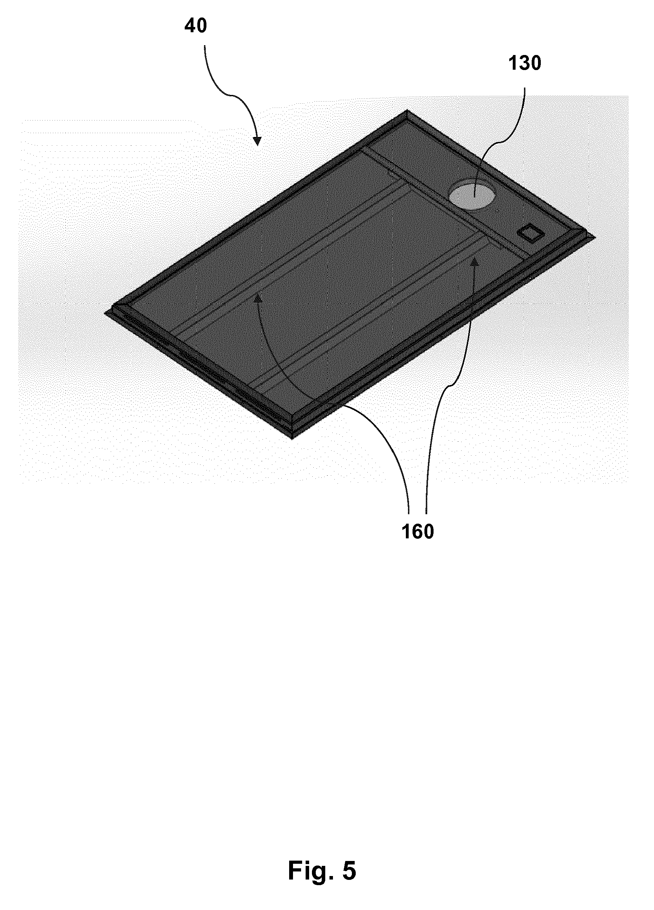

Figure 5 illustrates the back plate 40 configured to collect thermal energy from the sun and conduct and heat air. An air outlet 130 in the back plate is also illustrated. The back plate 40 has a profile pattern 160 arranged with different angles towards the sun when the energy panel is installed for intended use. The profile pattern 160 is configured for two functions: One is to increase the surface of the back plate 40 for better energy transfer from the sun to the air flowing through the energy panel 200. A second function of the profile pattern 160 is to guide air through the energy panel 200 to obtain a substantially laminar flow when the energy panel is installed for intended use and with air heated by the back plate.

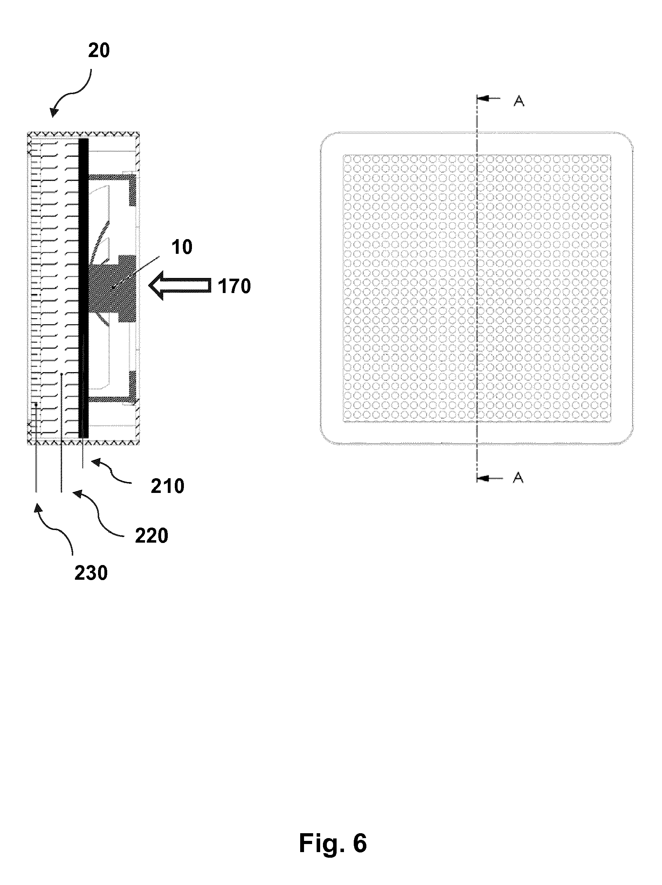

Figure 6 illustrates an exemplified wall vent 400 embodiment comprising a fan 10 and a filter unit 20. The figure on the right-hand illustrates a front view of the wall vent, and a cross-section view on the A-A line is illustrated in the figure on the left-hand side. The exemplified wall vent 400 is illustrated with three filter characteristics: an absorbing filter 210 to remove gaseous molecules including harmful or odorous compounds or molecules, a fine mechanical filter 220 to filter particulate matter including particles, pollen and large bacteria and an antibacterial filter 230 to remove microorganisms. Here the embodiment of the wall vent 400 is illustrated according to an air flow direction through the fan and then passing through the filters in the order mentioned. However, then filter characteristics and the fan may be interchanged in accordance with the filtering characteristics considering the air resistance of the filters, and the air flow though filter unit 20 and fan 10.

One exemplary configuration of a filter unit 20 with three different filter characteristics is to use an active carbon filter as an absorbing filter 210, an HEPA-like filter as a fine mechanical filter 220 and a filter with an antibacterial coating as an antibacterial filter 230.

## Claims

1. Solar powered heating and ventilation system (100) comprising
- an energy panel comprising
- a front plate (30) where part of the front plate (30) comprises a PV solar panel (120) configured to produce electricity for the heating and ventilation system (100),
- a back plate (40) configured to collect thermal energy from the sun and conduct and heat air and comprising an air outlet (130), and
- a frame including two side profiles (70), a top profile (50) and a bottom profile (60) where the said bottom profile (60) has an inlet for air (90) with a mechanical filter (110); and
- a wall vent (400) interactively separated from the energy panel by a coupling, and the wall vent (400) comprises a fan (10) and a filter unit (20) with a filtering characteristic arranged to filter the heated air from the energy panel.

2. Solar powered heating and ventilation system (100) according to claim 1 **characterized in that** the filter unit (20) has at least two filtering characteristics arranged to filter air.

3. Solar powered heating and ventilation system (100) according to any preceding claim **characterized in that** the filter unit (20) has one or more filter arrangements for:
- at least two individual filters with different filtering characteristics or
- a sandwich-structured filter of at least two different filtering characteristics.

4. Solar powered heating and ventilation system (100) according to any preceding claim **characterized in that** the filter unit (20) is configured for the individual filter characteristics to be replaced.

5. Solar powered heating and ventilation system (100) according to according to any of the preceding claim **characterized in that** the filter unit (20) is made of disposable material, substantially disposable materials, or substantially of disposable materials.

6. Solar powered heating and ventilation system (100) according to any preceding claim **characterized in that** the filter unit (20) comprises filtering characteristics chosen amongst:
- an absorbing filter or series to remove gaseous molecules including harmful or odorous compounds or molecules;
- a fine mechanical filter or series to filter particulate matter including particles, pollen and large bacteria; or
- an antibacterial filter or series to remove microorganisms.

7. Solar powered heating and ventilation system (100) according to any preceding claim **characterized in that** the filter unit (20) comprises filtering characteristics obtained by:
- an active carbon filter as an absorbing filter;
- an HEPA-like filter as a fine mechanical filter; and
- a filter with an antibacterial coating as an antibacterial filter, and arranged in this order from the inflow of air.

8. Solar powered heating and ventilation system (100) according any preceding claim **characterized in that** the filter unit (20) comprises an electrically driven filter part.

9. Solar powered heating and ventilation system (100) according any preceding claim **characterized in that** the wall vent (400) is configured to operate as a function of at least one input from a sensor measuring the condition of air.

10. Solar powered heating and ventilation system (100) according to any preceding claim **characterized in** further comprising an indicator of at least one filter status, which indicator is optionally configured to signal a filter status or to operate the wall vent (400).

11. Solar powered heating and ventilation system (100) according any preceding claim **characterized in** further comprising a transceiver unit configured with one or more of:
- a transmitter unit for transmitting operational status of the system
- a receiver unit for receiving operational parameters to the system.

12. Solar powered heating and ventilation system (100) according to any of the preceding claims **characterized in that** the back plate (40) has a profile pattern (160) arranged with different angles towards the sun when the energy panel is installed for intended use.

13. Solar powered heating and ventilation system (100) according to any of the preceding claims **characterized in that** the back plate (40) has a profile pattern (160) arranged to guide the air flow as a substantially laminar flow when the energy panel is installed for intended use and with air heated by the back plate.
